# EUROPEAN PATENT SPECIFICATION

(11) **EP 3 187 708 B1**
(45) Date of publication and mention of the grant of the patent: **17.10.2018**
(21) Application number: 15836834.0
(22) Date of filing: 03.08.2015
(51) Int. Cl.: F02B 29/04, F02M 25/022, F02M 25/028, F02M 31/20, F28F 17/00, F28D 21/00

(54) **INTERCOOLER DEVICE FOR SUPERCHARGED INTERNAL COMBUSTION ENGINE**
ZWISCHENKÜHLER FÜR EINEN AUFGELADENEN VERBRENNUNGSMOTOR
DISPOSITIF REFROIDISSEUR INTERMÉDIAIRE POUR MOTEUR À COMBUSTION INTERNE SURALIMENTÉ

(30) Priority: 27.08.2014 JP 2014172199
(43) Date of publication of application: 05.07.2017
(73) Proprietor: TOYOTA JIDOSHA KABUSHIKI KAISHA, Toyota-shi, Aichi-ken 471-8571 (JP)
(72) Inventor: YOKOI, Tomoya, Toyota-shi, Aichi-ken 471-8571 (JP)
(74) Representative: Winter, Brandl, Fürniss, Hübner, Röss, Kaiser, Polte - Partnerschaft mbB
(86) International application number: PCT/JP2015/071934
(87) International publication number: WO 2016/031495

(56) References cited:
- DE-A1-102009 022 986
- DE-A1-102012 219 796
- FR-A1- 2 553 827
- FR-A1- 2 908 505
- FR-A1- 2 957 980
- JP-A- 2005 226 476
- JP-A- 2014 169 632
- JP-A- 2014 169 654
- JP-A- 2015 063 913
- US-A1- 2011 094 219
- US-A1- 2014 076 289
- US-B2- 8 783 233
- US-B2- 8 783 233

## Description

### TECHNICAL FIELD

The present invention relates to an intercooler device of a supercharged internal combustion engine, and more particularly to a structure for discharging condensate water from an intercooler.

### BACKGROUND ART

As a conventional intercooler device of a supercharged internal combustion engine, Japanese Patent Application Publication No. 2012-117455 discloses a structure in which a collection part for condensate water generated in an intake gas is defined inside an intercooler tank to temporarily collect the condensate water in the collection part. A drain that is defined at the lower end of the condensate water collection part is also disclosed.

Japanese Patent Application Publication No. 2012-102667 discloses a vacuum pipe that uses a negative pressure of an intake manifold as means for sucking out condensate water and oil from inside an intercooler tank into an internal combustion engine.

However, since the collection part is not defined as a chamber separate from an intake gas flow in the conventional intercooler device of a supercharged internal combustion engine, the condensate water collected in the collection part may be carried away at once in a large amount due to the flow velocity of the intake gas flowing through the intercooler, causing malfunction (failure) of the internal combustion engine. In particular, water having frozen in a core part of the intercooler during cold-engine driving may melt and be collected inside the intercooler during stop of the internal combustion engine, and then this water may be carried away by an intake gas flow and suctioned into the internal combustion engine during engine start, causing malfunction of the internal combustion engine, such as fluid compression, rough idle, and abnormal noise. Moreover, a drain requires regular maintenance work.

Documents US 8 783 233 B2 and FR 2 957 980 A1 disclose an intercooler device comprising the features of the preamble of claim 1. Document FR 2 908 505 A1 relates to a heat exchanger comprising automatic purge means.

### SUMMARY OF THE INVENTION

### TECHNICAL PROBLEM

A possible countermeasure is a structure in which a reservoir that temporarily collects condensate water generated in the intercooler is provided in a lower part of the low temperature-side tank of the intercooler, and in which a water suck-out pipe that extends from the bottom of the reservoir to a position at which the water suck-out pipe opens inside an outlet pipe of the intercooler is provided. In this structure, the condensate water collected in the reservoir is sucked out through the water suck-out pipe into the outlet pipe and discharged into the outlet pipe by means of a differential pressure between the pressure inside the reservoir and the pressure at the outlet of the water suck-out pipe inside the outlet pipe. The outer diameter of the water suck-out pipe is constant throughout the water suck-out pipe in its lengthwise direction.

However, in the above countermeasure structure, if the outer diameter of the outlet of the water suck-out pipe is set so that an appropriate amount of condensate water is sucked out while the internal combustion engine is idling and the amount of air is small, an excessively large amount of condensate water is sucked out while a throttle valve is fully open and the amount of air is large, which may result in malfunction of the internal combustion engine. Conversely, if the outer diameter of the outlet of the water suck-out pipe is set so that an appropriate amount of condensate water is sucked out while the throttle valve is fully open, an excessively small amount of condensate water is sucked out during idling, which may result in an overflow of the condensate water inside the low temperature-side tank. Thus, there is room for improvement to discharge an appropriate amount of condensate water during idling as well as while the throttle valve is fully open.

An object of the present invention is to provide an intercooler device of a supercharged internal combustion engine that is configured to suck out condensate water from inside a reservoir through a water suck-out pipe into an outlet pipe, and is capable of discharging an appropriate amount of condensate water during idling as well as while a throttle valve is fully open.

### SOLUTION TO PROBLEM

An intercooler device of a supercharged internal combustion engine of the present invention to achieve the above object can have the following first to sixteenth aspects (aspects may read as configurations). The reference signs indicated in parentheses correspond to the reference signs appearing in the drawings.

The present invention includes a first embodiment to a fifth embodiment to be described later. The relations between the following first to sixteenth aspects and the first embodiment to the fifth embodiment to be described later are as follows:
The first to fifth aspects are applicable to any one of the first embodiment to the fifth embodiment of the present invention.

The sixth to eleventh aspects are applicable to any one of the first embodiment to the fourth embodiment of the present invention.

The twelfth aspect is applied to the first embodiment of the present invention. The thirteenth aspect is applied to the second embodiment of the present invention. The fourteenth aspect is applied to the third embodiment of the present invention. The fifteenth aspect is applied to the fourth embodiment of the present invention. The sixteenth aspect is applied to the fifth embodiment of the present invention.

In the first aspect of the present invention, an intercooler device (10) of a supercharged internal combustion engine includes a low temperature-side tank (26) and an outlet pipe (28) extending from the low temperature-side tank (26). A reservoir (30) that temporarily collects condensate water is provided in a lower part of the low temperature-side tank (26). A water suck-out pipe (32) that extends from a bottom of the reservoir (30) to a position at which the water suck-out pipe (32) opens inside the outlet pipe (28) is provided. The intercooler device is configured so that an appropriate amount of condensate water (12) is sucked out from inside the reservoir (30) through the water suck-out pipe (32) while the internal combustion engine is idling.

A constriction (328) that inhibits an excessive amount of condensate water from being sucked out through the water suck-out pipe (32) while a throttle valve of the internal combustion engine is fully open is defined in a condensate water discharge passage (322) formed inside the water suck-out pipe (32).

The second aspect of the present invention is the intercooler device according to the first aspect, wherein an opening (326) of the water suck-out pipe (32) leading into the outlet pipe (28) is located upstream of the throttle valve in a supercharged air flow direction.

The third aspect of the present invention is the intercooler device according to the first aspect, wherein the pressure difference between both ends of the water suck-out pipe (32) is set to 20 to 100 mm in head while the internal combustion engine is idling. The diameter of the constriction (328) is set to 1 to 3 mm.

The fourth aspect of the present invention is the intercooler device according to the first aspect, wherein the constriction (328) is formed only in a part of the entire condensate water discharge passage (322) in its lengthwise direction.

The fifth aspect of the present invention is the intercooler device according to the first aspect, wherein the diameter of the condensate water discharge passage (322) on both sides of the constriction (328) in a discharged condensate water flow direction is larger than the diameter of the constriction (328).

The sixth aspect of the present invention is the intercooler device according to the first aspect, wherein the water suck-out pipe (32) includes an upright part (332) that has a portion opening at a bottom of the reservoir (30) and extending in an upright direction, and a lateral part (330) that is connected to an upper end of the upright part (332), extends in a lateral direction, and opens inside the outlet pipe (28). The outer diameter of the lateral part (330) of the water suck-out pipe (32) is larger than the outer diameter of the upright part (332) thereof, and is set to such a diameter that a pressure for sucking out an appropriate amount of condensate water (12) while the internal combustion engine is idling is created in a supercharged air passage part defined between an outer surface of the lateral part (330) and an inner surface of the outlet pipe (28).

The seventh aspect of the present invention is the intercooler device according to the sixth aspect, wherein a central axial line of the lateral part (330) of the water suck-out pipe (32) is placed coaxially with a central axial line of the outlet pipe (28).

The eighth aspect of the present invention is the intercooler device according to the sixth aspect, wherein the external form of at least one of an upper portion of the upright part (332) and the lateral part (330) of the water suck-out pipe (32) is shaped so as to reduce pressure loss of a flow of supercharged air flowing from the low temperature-side tank (26) into the outlet pipe (28).

The ninth aspect of the present invention is the intercooler device according to the first aspect, wherein the diameter of the condensate water discharge passage (322) formed inside the water suck-out pipe (32) decreases gradually from a leading end of the water suck-out pipe (32) toward the constriction (328).

The tenth aspect of the present invention is the intercooler device according to the sixth aspect, wherein the outer surface of the lateral part (330) of the water suck-out pipe (32) is provided with an outer diameter-reduced section (342) with an outer diameter decreasing gradually from a maximum outer diameter section (340) of the lateral part (330) toward a leading end.

The eleventh aspect of the present invention is the intercooler device according to the sixth aspect, wherein a thinned section (344) for preventing sinks during molding of the water suck-out pipe (32) is provided around the constriction (328) in the lateral part (330) of the water suck-out pipe (32).

The twelfth aspect of the present invention is the intercooler device according to the first aspect, wherein the low temperature-side tank (26) is provided with a partition plate (36) that partitions the inside of the low temperature-side tank (26) into upper and lower parts, and the water suck-out pipe (32) extends from inside the reservoir (30) to an upper chamber (38) by penetrating the partition plate (36), bends in the upper chamber (38), enters inside the outlet pipe (28) from inside the upper chamber (38), and opens inside the outlet pipe (28).

The thirteenth aspect of the present invention is the intercooler device according to the first aspect, wherein a cross-sectional area-reduced section (28a) with a cross-sectional area decreasing gradually in an intake gas flow direction, a throat (28b) with a minimum cross-sectional area, and a cross-sectional area-increased section (28c) with a cross-sectional area increasing gradually in the intake gas flow direction are provided in the outlet pipe (28) in this order in the intake gas flow direction. An open end of the water suck-out pipe (32) leading into the outlet pipe (28) is located in a region inside the outlet pipe (28) corresponding to the throat (28b).

The fourteenth aspect of the present invention is the intercooler device according to the first aspect, wherein the water suck-out pipe (32) couples the inside of the reservoir (30) to the inside of the outlet pipe (28) by extending once to the outside of the low temperature-side tank (26).

The fifteenth aspect of the present invention is the intercooler device according to the first aspect, wherein an intercooler (20) includes a down-flow core (24) through which an intake gas flows downward or a cross-flow core (24) through which an intake gas flows in a crosswise direction. The outlet pipe (28) is provided in an upper end part or an intermediate part of the low temperature-side tank (26) in an upright direction. An area inside the low temperature-side tank (26) located further on the lower side than the outlet pipe (28) constitutes the reservoir (30), and the water suck-out pipe (32) extends from a bottom of the reservoir (30) to a position at which the water suck-out pipe (32) opens inside the outlet pipe (28).

The sixteenth aspect of the present invention is the intercooler device according to the first aspect, wherein the water suck-out pipe (32) couples the inside of the reservoir (30) to the inside of the outlet pipe (28) by extending once to the outside of the low temperature-side tank (26). A cross-sectional area-reduced section (28a) with a cross-sectional area decreasing gradually in an intake gas flow direction, a throat (28b) with a minimum cross-sectional area, and a cross-sectional area-increased section (28c) with a cross-sectional area increasing gradually in the intake gas flow direction are provided in the outlet pipe (28) in this order in the intake gas flow direction. An open end of the water suck-out pipe (32) leading into the outlet pipe (28) is located at a wall surface of the throat (28b).

### ADVANTAGEOUS EFFECTS OF INVENTION

According to any one of the first aspect to the fifth aspect of the present invention, the intercooler device is configured so that an appropriate amount of condensate water is sucked out from inside the reservoir through the water suck-out pipe while the internal combustion engine is idling and the amount of air is small. Moreover, the constriction is defined in the condensate water discharge passage of the water suck-out pipe, which inhibits an excessive amount of condensate water from being sucked out through the water suck-out pipe while the throttle valve of the internal combustion engine is fully open and the amount of air is large. As a result, an appropriate amount of condensate water can be discharged during idling as well as while the throttle valve is fully open.

According to the sixth aspect of the present invention, increasing the outer diameter of the lateral part of the water suck-out pipe can create a pressure between the lateral part and the outlet pipe for sucking out an appropriate amount of condensate water while the internal combustion engine is idling, and thus can secure the efficiency of discharging condensate water during idling when the amount of air is small.

According to the seventh aspect of the present invention, the central axial line of the lateral part of the water suck-out pipe is placed coaxially with the central axial line of the outlet pipe, and thus an increase in pressure loss of the supercharged air when the amount of air is large can be suppressed.

According to the eighth aspect of the present invention, the external form of at least one of the upper portion of the upright part and the lateral part of the water suck-out pipe is shaped so as to reduce the pressure loss of the flow of supercharged air flowing from the low temperature-side tank into the outlet pipe. Thus, an increase in pressure loss of the supercharged air when the amount of air is large can be suppressed.

According to the ninth aspect of the present invention, the diameter of the condensate water discharge passage formed inside the water suck-out pipe decreases gradually from the leading end of the water suck-out pipe toward the constriction. Thus, the condensate water undergoes a smaller pressure loss at the outlet of the constriction when the condensate water flows through the condensate water discharge passage, so that the pressure inside the water suck-out pipe is almost entirely conducted to the outlet of the constriction. As a result, a decrease in sucking out pressure is suppressed.

According to the tenth aspect of the present invention, the outer surface of the lateral part of the water suck-out pipe is provided with the outer diameter-reduced section with the outer diameter decreasing gradually from the maximum outer diameter section of the lateral part toward the leading end. The flow of supercharged air undergoes a comparatively large pressure loss in a region corresponding to the inlet of the outlet pipe and the leading end of the water suck-out pipe where the flow passage sectional area changes rapidly. Thus, there is a smaller change in flow passage sectional area if the sectional area changes from the outer diameter-reduced section to the total sectional area of the outlet pipe than if the sectional area changes from the maximum outer diameter section to the total sectional area of the outlet pipe, and accordingly the pressure loss of the flow of supercharged air is smaller, so that a decrease in output of the internal combustion engine can be suppressed.

According to the eleventh aspect of the present invention, the thinned section is provided around the constriction in the lateral part of the water suck-out pipe. Thus, sinks occurring around the constriction during molding of the water suck-out pipe are prevented, so that the constriction is formed with an accurate diameter and water is accurately sucked out.

According to the twelfth aspect of the present invention, the water suck-out pipe extends from inside the reservoir to the upper chamber, bends in the upper chamber, enters inside the outlet pipe from inside the upper chamber, and opens inside the outlet pipe. Thus, it is possible to create a low pressure part for sucking out the condensate water around the outlet of the water suck-out pipe by means of the constriction of the flow of supercharged air when flowing from the low temperature-side tank into the outlet pipe.

According to the thirteenth aspect of the present invention, the open end of the water suck-out pipe leading into the outlet pipe is provided in the throat. Thus, the Venturi effect of the outlet pipe is enhanced, and the effect of sucking out the condensate water through the water suck-out pipe is enhanced.

According to the fourteenth aspect of the present invention, the water suck-out pipe couples the inside of the reservoir to the inside of the outlet pipe by extending once to the outside of the low temperature-side tank. Thus, the external size is increased, but the flexibility of routing of the water suck-out pipe is higher.

According to the fifteenth aspect of the present invention, a cross-flow intercooler can also suck out condensate water while inhibiting the condensate water from being sucked out at once in a large amount.

According to the sixteenth aspect of the present invention, the open end of the water suck-out pipe leading into the outlet pipe is located at the wall surface of the throat. Thus, the condensate water can be sucked out through the water suck-out pipe into the outlet pipe by the Venturi effect of the outlet pipe.

### BRIEF DESCRIPTION OF THE DRAWINGS

[FIG. 1] FIG. 1 is an overall front view of an intercooler device of a supercharged internal combustion engine (hereinafter also referred to simply as an "intercooler device") according to a first embodiment of the present invention.
[FIG. 2] FIG. 2 is a sectional view of a low temperature-side tank and its vicinity in the intercooler device of FIG. 1 as seen from the front side.
[FIG. 3] FIG. 3 is a plan view of the low temperature-side tank and its vicinity in the intercooler device of FIG. 1.
[FIG. 4] FIG. 4 is an enlarged sectional view of a water suck-out pipe and an outlet pipe and their vicinity in the intercooler device of FIG. 1.
[FIG. 5] FIG. 5 is a sectional view of the water suck-out pipe and the outlet pipe of FIG. 4 and their vicinity as seen along the line 5-5.
[FIG. 6] FIG. 6 is a sectional view, applicable to any one of the first embodiment to a fourth embodiment of the present invention, of the water suck-out pipe and the outlet pipe and their vicinity in the intercooler device according to the first embodiment.
[FIG. 7] FIG. 7 is a sectional view, applicable to any one of the first embodiment to the fourth embodiment of the present invention, of the water suck-out pipe and the outlet pipe and their vicinity in the intercooler device according to the first embodiment.
[FIG. 8] FIG. 8 is a sectional view, applicable to any one of the first embodiment to the fourth embodiment of the present invention, of the water suck-out pipe and the outlet pipe and their vicinity in the intercooler device according to the first embodiment.
[FIG. 9] FIG. 9 is a sectional view of the water suck-out pipe of FIG. 8 as seen along the line 9-9.
[FIG. 10] FIG. 10 is a sectional view, corresponding to FIG. 2, of a low temperature-side tank and its vicinity in an intercooler device according to the second embodiment of the present invention as seen from the front side.
[FIG. 11] FIG. 11 is a sectional view, corresponding to FIG. 2, of a low temperature-side tank and its vicinity in an intercooler device according to the third embodiment of the present invention as seen from the front side.
[FIG. 12] FIG. 12 is an overall front view of an intercooler device according to the fourth embodiment of the present invention.
[FIG. 13] FIG. 13 is a side view of a low temperature-side tank and its vicinity in the intercooler device of FIG. 12.
[FIG. 14] is a sectional view, corresponding to FIG. 2, of a low temperature-side tank and its vicinity in an intercooler device according to a fifth embodiment of the present invention as seen from the front side.

### MODES FOR CARRYING OUT THE INVENTION

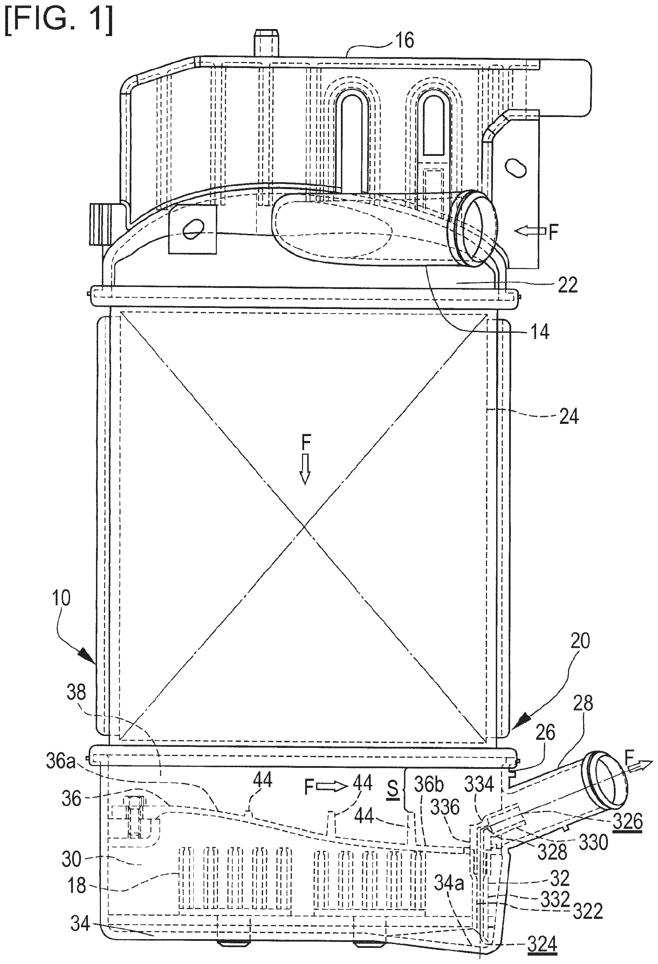

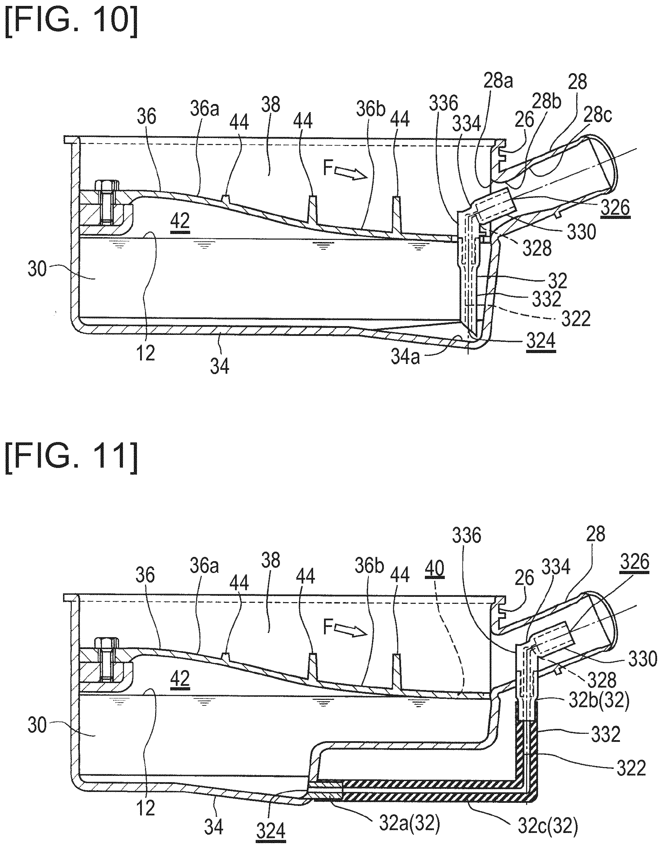

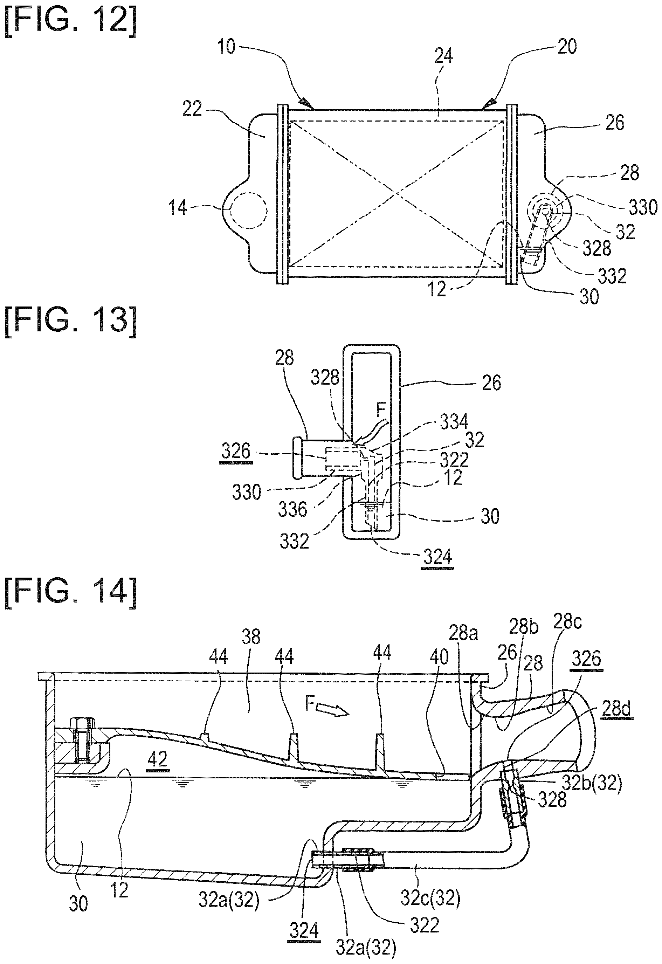

An intercooler device 10 of a supercharged internal combustion engine of the present invention will be described with reference to the drawings. FIG. 1 to FIG. 9 show a first embodiment of the present invention; FIG. 10 shows a second embodiment of the present invention; FIG. 11 shows a third embodiment of the present invention; FIG. 12 and FIG. 13 show a fourth embodiment of the present invention; and FIG. 14 shows a fifth embodiment of the present invention. Structural parts that are the same or correspond to each other in all the embodiments of the present invention will be denoted by the same reference signs in all the embodiments of the present invention.

### First Embodiment

First, the configuration of the first embodiment of the present invention will be described with reference to FIG. 1 to FIG. 9.

As shown in FIG. 1, the intercooler device 10 of a supercharged internal combustion engine of the present invention includes an intercooler 20 in a supercharged air passage of the internal combustion engine. In the drawings, the arrow F indicates a rough flow direction of supercharged air (also referred to as an "intake gas"). The supercharged internal combustion engine may be a spark-ignition internal combustion engine or a diesel internal combustion engine. The supercharger may be a turbocharger or a mechanical supercharger other than a turbocharger. The intercooler 20 is a heat exchanger installed in the supercharged air passage, and serves to increase the charging efficiency of the internal combustion engine by cooling the supercharged air that has been compressed by the supercharger and has an elevated temperature. A throttle valve is provided downstream of the intercooler 20, between the intercooler 20 and the internal combustion engine, and a surge tank and an intake manifold are provided between the throttle valve and the internal combustion engine.

The intercooler 20 includes a high temperature-side tank 22 into which the supercharged air flows, an intercooler core (hereinafter simply referred to as a "core") 24 where heat exchange takes place, and a low temperature-side tank 26 from which the supercharged air flows out. An inlet pipe 14 that is an inlet into the intercooler 20 for the supercharged air is connected to the high temperature-side tank 22, and an outlet pipe 28 that is an outlet from the intercooler 20 for the supercharged air is connected to the low temperature-side tank 26. The inlet pipe 14, the high temperature-side tank 22, the core 24, the low temperature-side tank 26, and the outlet pipe 28 are provided in this order in a supercharged air flow direction. The inlet pipe 14 and the outlet pipe 28 may be formed integrally with the intercooler 20, or may be formed separately from the intercooler 20 and coupled to the intercooler 20. The drawings show the case where these pipes are formed integrally. The high temperature-side tank 22 is supported on a vehicle body through a bracket 16, and the low temperature-side tank 26 is supported on the vehicle body through ribs 18

The core 24 may be a down-flow core through which the supercharged air flows downward as shown in FIG. 1 to FIG. 3, or may be a cross-flow core through which the supercharged air flows in a crosswise direction as shown in FIG. 12 and FIG. 13 to be described later. In the case of the down-flow core, the high temperature-side tank 22 is provided on the upper side of the core 24 and the low temperature-side tank 26 is provided on the lower side of the core 24. In the case of the cross-flow core, the high temperature-side tank 22 and the low temperature-side tank 26 are provided on left and right sides of the core 24. As conventionally known structures are adopted as the structures of the high temperature-side tank 22 and the core 24, description of the details thereof will be omitted. Condensate water generated in the core 24 is collected in the low temperature-side tank 26.

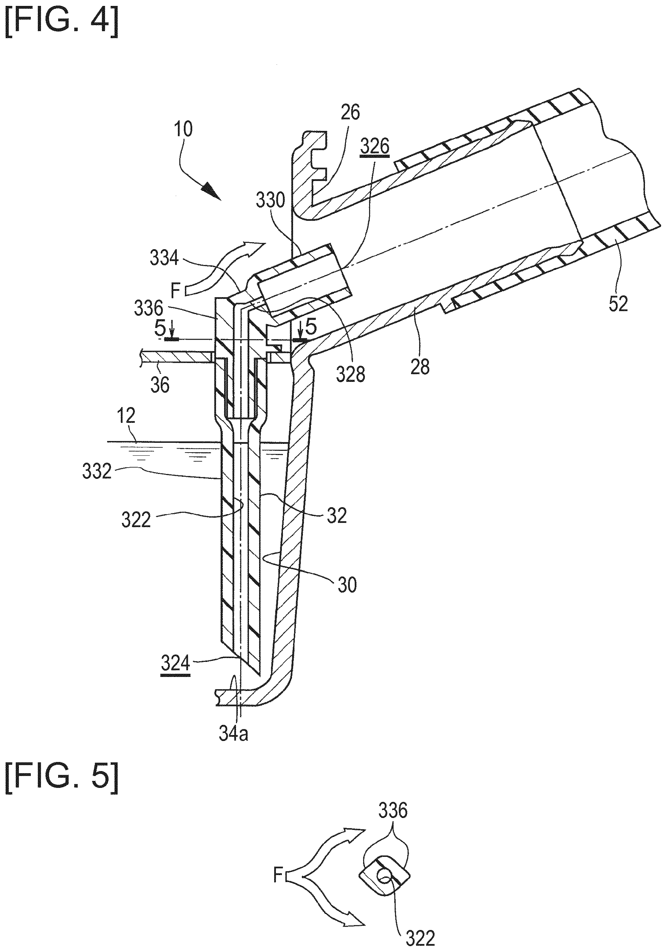

It is desirable that the outlet pipe 28 extend obliquely upward from a side wall of the low temperature-side tank 26 toward the throttle valve. In this case, any condensate water overflowing from inside the low temperature-side tank 26 into the outlet pipe 28 returns by gravity to the low temperature-side tank 26. A hose 52 (FIG. 4) or a pipe constituting a part of an intake passage of the internal combustion engine is connected to the outlet pipe 28.

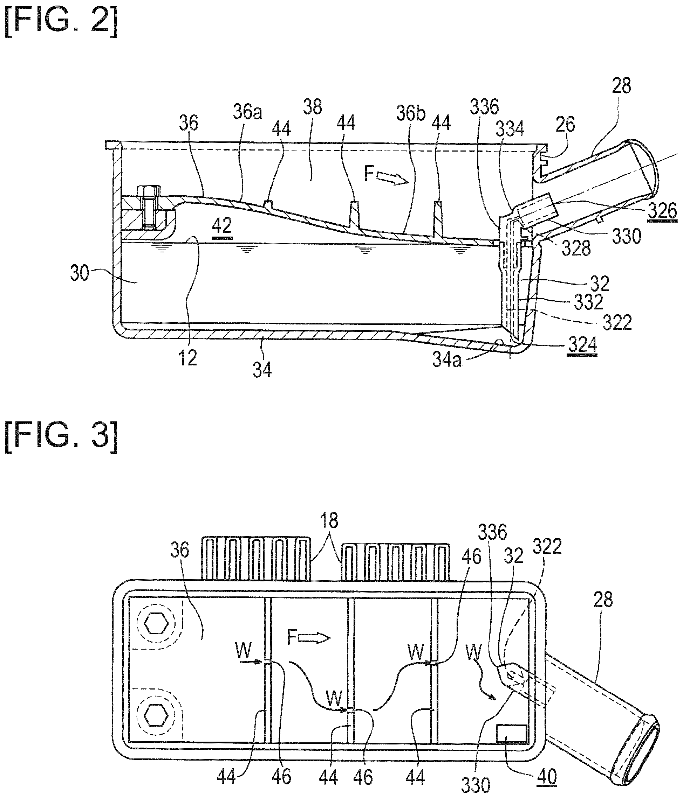

As shown in FIG. 1 and FIG. 2, a reservoir 30 that temporarily collects condensate water 12 is provided in a lower part of the low temperature-side tank 26. The internal space of the low temperature-side tank 26 may be divided into upper and lower parts by a partition plate 36. In the case where the partition plate 36 is provided, an upper chamber 38 through which the supercharged air flows is formed on the upper side of the partition plate 36, and the reservoir 30 is formed on the lower side of the partition plate 36. The outlet pipe 28 opens to the upper chamber 38. In the case where the partition plate 36 is provided, the partition plate 36 is provided with a water fall opening 40 through which the condensate water on the partition plate 36 is let fall to the reservoir 30. Since the reservoir 30 is provided and the condensate water is temporarily collected in the reservoir 30, the condensate water having entered the low temperature-side tank 26 does not flow out at once, so that malfunction of the internal combustion engine due to the condensate water is suppressed.

The low temperature-side tank 26 is provided with a water suck-out pipe 32 that extends from a bottom of the reservoir 30 to a position at which the water suck-out pipe 32 opens inside the outlet pipe 28. The condensate water 12 (FIG. 2) collected inside the reservoir 30 is sucked out in an appropriate amount from the bottom of the reservoir 30 through the water suck-out pipe 32 into the outlet pipe 28. The position at which the water suck-out pipe 32 opens inside the outlet pipe 28 is located upstream of the throttle valve in the supercharged air flow direction, and thus sucking out of the condensate water 12 through the water suck-out pipe 32 is not sucking out by means of an intake negative pressure downstream of the throttle valve.

The outlet pipe 28 is located downstream of the low temperature-side tank 26 in the supercharged air flow direction. The supercharged air passage sectional area inside the outlet pipe 28 is smaller than the supercharged air passage sectional area inside the low temperature-side tank 26, and the flow velocity of the supercharged air inside the outlet pipe 28 is higher than the flow velocity of the supercharged air inside the low temperature-side tank 26. As the supercharged air from inside the low temperature-side tank 26 increases its flow velocity inside the outlet pipe 28, part of the static pressure inside the low temperature-side tank 26 is converted into a dynamic pressure inside the outlet pipe 28, resulting in the static pressure inside the outlet pipe 28 falling below the static pressure inside the low temperature-side tank 26. Due to the Venturi effect caused by a decrease in static pressure attributable to the difference in flow velocity, and to a pressure loss of the supercharged air, especially a pressure loss at the inlet of the outlet pipe 28, the static pressure of the supercharged air inside the outlet pipe 28 is lower than the static pressure of the supercharged air inside the low temperature-side tank 26. This pressure difference causes the condensate water 12 (FIG. 2) collected inside the reservoir 30 to be sucked out from the bottom of the reservoir 30 through the water suck-out pipe 32 into the outlet pipe 28.

As shown in FIG. 1 to FIG. 13, the opening of the water suck-out pipe 32 toward the outlet pipe 28 may be located inside the outlet pipe 28 in a region away from an inner wall surface of the outlet pipe 28, or may be located at the inner wall surface of the outlet pipe 28 as shown in FIG. 14 to be described later. To avoid being subjected to the dynamic pressure of the flow of supercharged air, the water suck-out pipe 32 opens further toward the downstream side in the supercharged air flow direction than a direction orthogonal to the supercharged air flow direction, or opens in a direction orthogonal to the supercharged air flow direction. The water suck-out pipe 32 protrudes from inside the low temperature-side tank 26 into the outlet pipe 28 (FIG. 1 to FIG. 10 or FIG. 12 and FIG. 13), or protrudes into the outlet pipe 28 in a region of the outlet pipe 28 (FIG. 11), or terminates at the inner wall surface of the outlet pipe 28 (FIG. 14).

As shown in FIG. 2, a bottom wall 34 of the reservoir 30 descends toward an end of the water suck-out pipe 32 on the side of the reservoir 30, and a part of the bottom wall 34 of the reservoir 30 in the vicinity of the end of the water suck-out pipe 32 on the side of the reservoir 30 forms a lowermost part 34a of the bottom wall 34 of the reservoir 30. Thus, the condensate water 12 inside the reservoir 30 is gathered toward a lower end of the water suck-out pipe 32. In the case where the end of the water suck-out pipe 32 on the side of the reservoir 30 extends in an upright direction, it is desirable that the end on the side of the reservoir 30 be cut obliquely relative to the bottom wall 34 of the reservoir 30 so that the end is not closed by coming in close contact with the bottom wall 34 of the reservoir 30.

As shown in FIG. 1 and FIG. 2, in the case where the water suck-out pipe 32 is disposed inside the low temperature-side tank 26, the water suck-out pipe 32 may extend from the reservoir 30 to the upper chamber 38 by penetrating the partition plate 36. A region of the partition plate 36 penetrated by the water suck-out pipe 32 may be a region where the water fall opening 40 is provided, or may be a region other than the region where the water fall opening 40 is provided. If the region of the partition plate 36 penetrated by the water suck-out pipe 32 appears in the drawings but the water fall opening 40 does not, this means that the region of the partition plate 36 penetrated by the water suck-out pipe 32 and the position of the water fall opening 40 do not coincide with each other, and that the water fall opening 40 does not appear in the drawings because the region of the partition plate 36 penetrated by the water suck-out pipe 32 is shown.

In the case where the partition plate 36 is provided, the partition plate 36 has an upstream-side part 36a and a downstream-side part 36b in the supercharged air flow direction inside the upper chamber 38 as shown in FIG. 2. The partition plate 36 is formed in a shape descending from the upstream-side part 36a toward the downstream-side part 36b, and guides the flow of supercharged air F into the outlet pipe 28. The water fall opening 40 is provided in the downstream-side part 36b of the partition plate 36. It is desirable that a part of the partition plate 36 in the vicinity of the water fall opening 40 be inclined so as to descend toward the water fall opening 40.

As shown in FIG. 2, the upstream-side part 36a of the partition plate 36 forms a space 42, on the lower surface side of the upstream-side part 36a, that serves to absorb an expansion of the volume of the condensate water 12 upon freezing when the condensate water 12 collected in reservoir 30 freezes while closing the water fall opening 40. The space 42 is a space defined between the lower surface of the upstream-side part 36a of the partition plate 36 and an upper surface of the condensate water 12 in a state where the condensate water 12 closes the water fall opening 40.

In the case where the partition plate 36 is provided, it is desirable that baffle plates 44 be provided on the upper surface of the partition plate 36 as shown in FIG. 1 to FIG. 3. The baffle plates 44 are disposed so as to block the flow of the condensate water 12 from the low temperature-side tank 26 to the outlet pipe 28 when the condensate water 12 overflows from the reservoir 30 onto the partition plate 36. However, the baffle plates 44 are each provided with one or more openings 46 through which the water on the partition plate 36 can pass so as not to completely stem the flow of the condensate water 12 from the low temperature-side tank 26 to the outlet pipe 28. The opening 46 may be a slit that is opened along the entire baffle plate 44 in its height direction, or may be a hole that is opened in a part of the baffle plate 44 in its height direction. The baffle plate 44 extends across opposite side surfaces of the low temperature-side tank 26 except for the region where the opening 46 is provided. The number, interval, height (the height from the partition plate 36 to an upper end of the baffle plate 44), and arrangement of the baffle plates 44 are set so that, when the condensate water overflows onto the partition plate 36 and a fluid collection is formed up to the position of the upper end of the baffle plate 44, all of the amount of fluid collected between the baffle plates 44, the amount of fluid collected downstream of the most downstream baffle plate 44, and the amount of fluid collected upstream of the most upstream baffle plate 44 do not exceed such an amount as leads to malfunction of the internal combustion engine even if the condensate water is carried away by the flow of supercharged air at once into the internal combustion engine.

As shown in FIG. 1 and FIG. 2, a cross-sectional area of the upper chamber 38 larger than the cross-sectional area of the outlet pipe 28 is secured on the upper side of the baffle plate 44 that is the lower side of the core 24. The cross-sectional area is the product of a distance S between the upper end of the baffle plate 44 and the lower end of the core 24 and the width of the low temperature-side tank 26. In the example shown in the drawings, the upper ends of the plurality of baffle plates 44 are located nearly at the same level, and the cross-sectional area larger than the cross-sectional area of the outlet pipe 28 is secured on the upper side of the plurality of baffle plates 44. Thus, the pressure loss that the supercharged air undergoes when flowing through the upper chamber 38 is reduced to be equal to or smaller than the pressure loss when flowing through the outlet pipe 28.

As shown in FIG. 3, to avoid all the openings 46 provided in the baffle plates 44 being located on the same straight line (e.g., a straight line passing through the opening 46 provided in any one of the baffle plates 44 and parallel to the opposite side surfaces of the low temperature-side tank 26 extending in a direction along the supercharged air flow direction), the opening 46 provided in at least one baffle plate 44 is located off that straight line.

To set the differential pressure between both ends of the water suck-out pipe 32 so that the condensate water 12 temporarily collected inside the reservoir 30 is sucked out in an appropriate amount through the water suck-out pipe 32 into the outlet pipe 28, the pressure difference when the amount of air inside the internal combustion engine is small, for example, during idling, serves as a reference. Specifically, the pressure difference between both ends of the water suck-out pipe 32 while the internal combustion engine is idling is desirably about 20 to 100 mm, and more desirably about 30 to 80 mm, in head so that the condensate water does not overflow inside the low temperature-side tank 26 while the internal combustion engine is idling. The height of the reservoir 30 and the distance in the upright direction between both ends of the water suck-out pipe 32 are determined accordingly. However, the head values are not limited to these values.

To produce an appropriate low condensate water sucking out pressure at the outlet pipe-side end of the water suck-out pipe 32 while the internal combustion engine is idling, the outer diameter of the water suck-out pipe 32 at the outlet pipe-side end is larger than the outer diameter of the water suck-out pipe 32 at the other part than the outlet pipe-side end. Thus, the supercharged air passage sectional area defined between the inner diameter of the outlet pipe 28 and the outer diameter of the water suck-out pipe 32 at the outlet pipe-side end is reduced at the outlet pipe-side end of the water suck-out pipe 32, so that the pressure at the outlet pipe-side end of the water suck-out pipe 32 is reduced. Alternatively, instead of the outer diameter of the water suck-out pipe 32 at the outlet pipe-side end being increased, or in addition to the outer diameter of the water suck-out pipe 32 at the outlet pipe-side end being increased, the inner diameter of the outlet pipe 28 may be reduced as shown in FIG. 10 and FIG. 14 to thereby reduce the pressure at the outlet pipe-side end of the water suck-out pipe 32.

If it is ensured that an appropriate low condensate water sucking out pressure is produced at the outlet pipe-side end of the water suck-out pipe 32 while the internal combustion engine is idling, the condensate water sucking out pressure of the water suck-out pipe 32 becomes too high while the throttle valve is fully open and the amount of air inside the internal combustion engine is large. A constriction 328 with the diameter reduced to a constant value (e.g., 1 to 3 mm, desirably 2 mm, but not limited to 3 mm, 2 mm, or 1 mm) is formed in the condensate water discharge passage 322 formed inside the water suck-out pipe 32, only in a part of the condensate water discharge passage 322 in its lengthwise direction so that, even when the amount of air inside the internal combustion engine is large, malfunction of the internal combustion engine is not caused as the condensate water 12 temporarily collected inside the reservoir 30 is sucked out in a large amount at once into the outlet pipe 28. In other words, the constriction 328 that inhibits an excessive amount of condensate water from being sucked out through the water suck-out pipe 32 while the throttle valve of the internal combustion engine is fully open is defined in the condensate water discharge passage 322 of the water suck-out pipe 32.

The diameter of the condensate water discharge passage 322 increases at least on both sides of the constriction 328, and changes in at least two stages over the entire condensate water discharge passage 322 in its lengthwise direction. If the diameter of the condensate water discharge passage 322 is reduced throughout the condensate water discharge passage 322 in its lengthwise direction, the amount of condensate water sucked out during idling decreases, which may result in an overflow of the condensate water inside the low temperature-side tank 26 during idling. Therefore, the constriction 328 is provided only in a part of the entire condensate water discharge passage 322 in its lengthwise direction, i.e., only in a part thereof from a reservoir-side opening 324 to an outlet-side opening 326.

It is desirable that the water suck-out pipe 32, the low temperature-side tank 26, the partition plate 36, and the baffle plate 44 be made of plastic or aluminum alloy, for example, in view of the light weight and moldability. In the example shown in the drawings, the water suck-out pipe 32 is made of plastic, and the low temperature-side tank 26, the partition plate 36, and the baffle plate 44 are made of aluminum alloy.

The foregoing configuration of the first embodiment is applicable to all the embodiments (first embodiment to fifth embodiment) of the present invention.

The first embodiment of the present invention further has the following detailed structure.

As shown in FIG. 1 to FIG. 4, the water suck-out pipe 32 includes an upright part 332 that has a portion having a lower end opening at the bottom of the reservoir 30 and extending in the upright direction, and a lateral part 330 that has one end connected to an upper end of the upright part 332, extends in a lateral direction, and opens inside the outlet pipe 28 at the other end. The upright direction in which the upright part 332 extends may be the vertical direction or may be inclined relative to the vertical direction. The lateral direction in which the lateral part 330 extends may be the horizontal direction or may be inclined relative to the horizontal direction. In the example shown in the drawings, the lateral part 330 extends obliquely upward in a direction away from the low temperature-side tank 26.

As shown in FIG. 4 and FIG. 6 to FIG. 8, the water suck-out pipe 32 may be formed as two divided parts, of which one is a head part composed of the lateral part 330 and an upper portion of the upright part 332 and the other is a leg part composed of an intermediate portion and a lower portion of the upright part 332, and then the two parts may be assembled with a lower end of the head part inserted into an upper end of the leg part.

The outer diameter of the lateral part 330 of the water suck-out pipe 32 is larger than the outer diameter of the upright part 332. Thus, the outer diameter is set to such a diameter that a low pressure for sucking out an appropriate amount of condensate water while the internal combustion engine is idling is created in a supercharged air passage part defined between an outer surface of the lateral part 330 and the inner surface of the outlet pipe 28.

As shown in FIG. 4, a central axial line of the lateral part 330 of the water suck-out pipe 32 is placed coaxially with a central axial line of the outlet pipe 28. The central axial line of the lateral part 330 and the central axial line of the outlet pipe 28 coincide with each other. Thus, the supercharged air passage sectional area inside the outlet pipe 28 is uniform around the central axial line, so that the pressure loss of the supercharged air is smaller than when the central axial line of the lateral part 330 and the central axial line of the outlet pipe 28 do not coincide with each other.

As shown in FIG. 4 to FIG. 7, the external form of at least one of the upper portion of the upright part 332 and the lateral part 330 of the water suck-out pipe 32 is shaped so as to reduce the pressure loss of the flow of supercharged air flowing from the upper chamber 38 of the low temperature-side tank 26 into the outlet pipe 28.

Specifically, as shown in FIG. 4, a pressure loss reducing shape 334 that has a recessed external form defined by a curved or bent line is formed along the flow of supercharged air in a portion of the water suck-out pipe 32 transitioning from the upper portion of the upright part 332 to the lateral part 330, the portion that comes in contact with the flow of supercharged air flowing from the upper chamber 38 of the low temperature-side tank 26 into the outlet pipe 28. The pressure loss reducing shape 334 reduces the pressure loss of the flow of supercharged air.

Moreover, as shown in FIG. 5, a pressure loss reducing shape 336 having an external form tapered in a direction opposite from the supercharged air flow direction is formed at a cross-section of the water suck-out pipe 32 orthogonal to the central axial line in the upper portion of the upright part 332, at the portion that comes in contact with the flow of supercharged air flowing from the upper chamber 38 of the low temperature-side tank 26 into the outlet pipe 28. The pressure loss reducing shape 336 reduces the pressure loss of the flow of supercharged air.

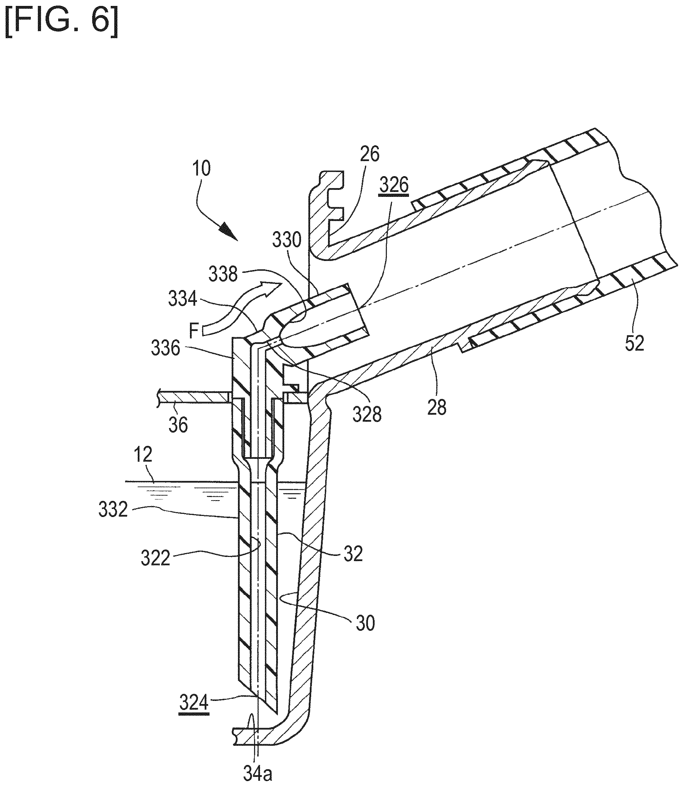

In the first embodiment of the present invention, as shown in FIG. 6, the diameter of the condensate water discharge passage 322 formed inside the water suck-out pipe 32 may decrease gradually in a section 338 extending from the leading end of the water suck-out pipe 32 on the side of the outlet pipe 28 toward the constriction 328. To look at this in the opposite direction, the diameter of the condensate water discharge passage 322 may increase gradually from the side of the constriction 328 toward the leading end of the water suck-out pipe 32 on the side of the outlet pipe 28. Thus, the pressure loss that the condensate water undergoes when flowing through the condensate water discharge passage 322 is reduced, so that the low pressure created at the leading end of the water suck-out pipe 32 on the side of the outlet pipe 28 is almost entirely conducted to the constriction 328, which allows favorable sucking out of the condensate water during idling.

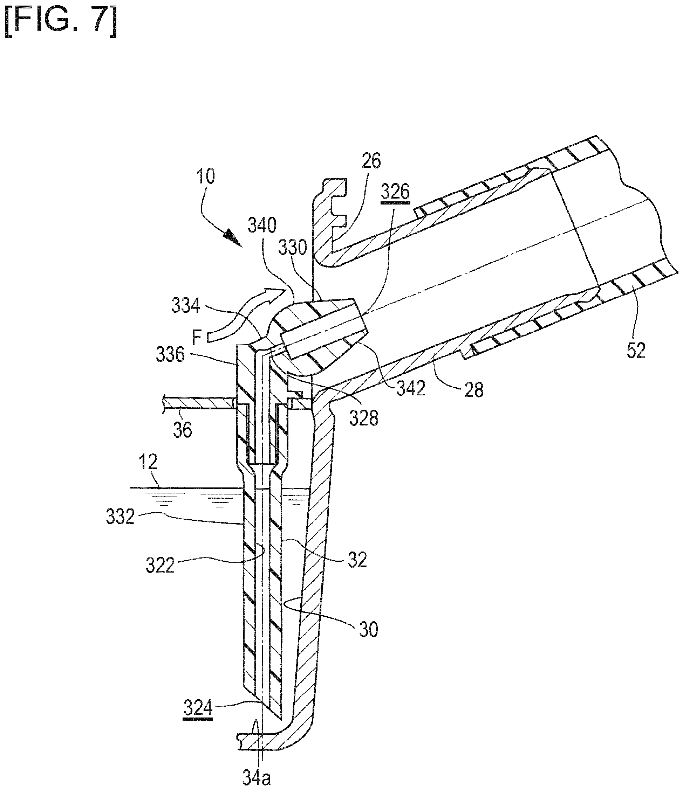

As shown in FIG. 7, the lateral part 330 of the water suck-out pipe 32 may be provided with an outer diameter-reduced section 342 with an outer diameter decreasing gradually from a maximum outer diameter section 340 of the lateral part 330 toward the leading end. Thus, the supercharged air passage sectional area inside the outlet pipe 28, which reaches its minimum in the maximum outer diameter section 340 of the lateral part 330, increases at the leading end of the lateral part 330, so that the low pressure around the maximum outer diameter section 340 is gradually recovered before reaching the leading end of the lateral part 330. As a result, the pressure loss of the flow of supercharged air at the leading end of the lateral part 330 is reduced, and a decrease in output of the internal combustion engine is suppressed.

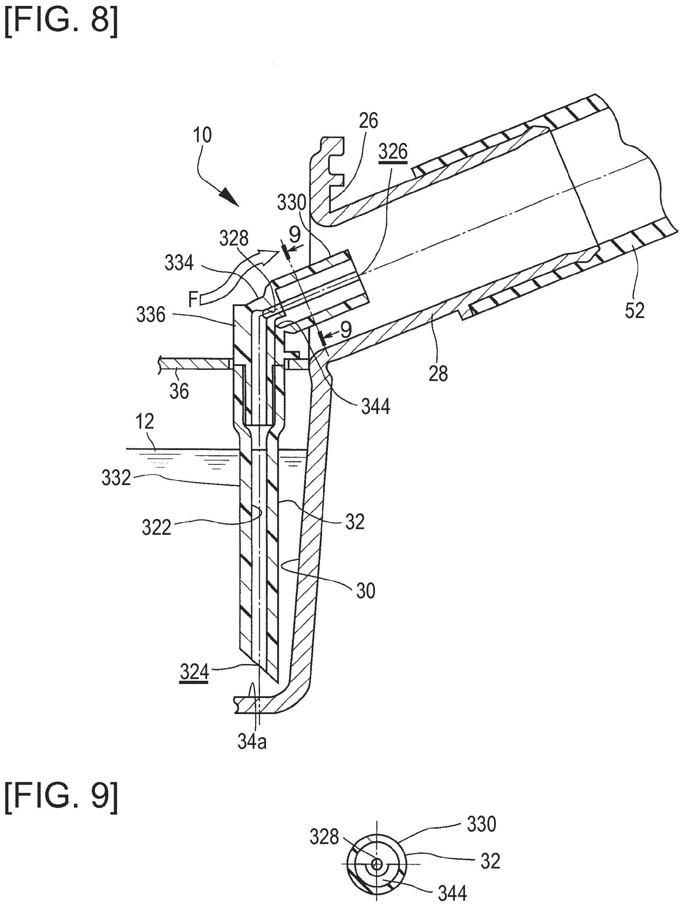

As shown in FIG. 8 and FIG. 9, a thinned section 344 for preventing sinks during molding of the water suck-out pipe 32 may be provided around the constriction 328 in the lateral part 330 of the water suck-out pipe 32. The thinned section 344 may be provided along the entire circumference of the constriction 328, or may be provided only in a part of the circumference of the constriction 328. In the case where the thinned section 344 is provided only in a part of the circumference of the constriction 328, it is desirable that the thinned section 344 be provided along about half the circumference of the water suck-out pipe 32, on the inner side of a section bent from the upright part 332 to the lateral part 330 where the wall tends to be thick. Providing the thinned section 344 can suppress shrinkage sinks around the constriction 328 during molding of the water suck-out pipe 32, so that the constriction 328 can be molded with an accurate inner diameter, and excessive sucking out of the condensate water while the throttle valve is fully open can be inhibited with high accuracy.

The foregoing detailed structure of the first embodiment of the present invention is applicable to the first embodiment to the fourth embodiment.

The first embodiment of the present invention further has the following structure.

As shown in FIG. 1 and FIG. 2, the water suck-out pipe 32 penetrates the partition plate 36 that is provided inside the low temperature-side tank 26 and partitions the inside of the low temperature-side tank 26 into upper and lower parts. The water suck-out pipe 32 extends from inside the reservoir 30 to the upper chamber 38 by penetrating the partition plate 36, bends in the upper chamber 38 toward the outlet pipe 28, enters inside the outlet pipe 28 from inside the upper chamber 38, and opens inside the outlet pipe.

To reduce the pressure loss of the flow of supercharged air, a corner formed by the inlet of the outlet pipe 28 and the side wall of the low temperature-side tank 26 is rounded. Thus, the flow of supercharged air is smoothly constricted at the inlet of the outlet pipe 28. Accordingly, the inlet of the outlet pipe 28 works like a part with a reduced sectional area of a Venturi pipe, so that a low pressure like that in a throat of a Venturi pipe is created in a region inside the outlet pipe 28 at a small distance from the inlet. It is desirable that the leading end of the water suck-out pipe 32 inside the outlet pipe 28 be disposed in a region inside the outlet pipe 28 at a small distance from the inlet, and that a low pressure created thereby inside the outlet pipe 28 be used to suck out the condensate water.

Next, the workings and effects of the first embodiment of the present invention will be described.

In the related art, condensate water that has frozen inside the intercooler 20 during cold driving and then melts and is collected inside the low temperature-side tank 26 during stop of the internal combustion engine may be suctioned into the internal combustion engine at once in a large amount by an intake gas flow during start of the internal combustion engine, causing malfunction of the internal combustion engine, such as fluid compression and rough idle. This condensate water may include condensate water that has frozen inside the intercooler 20 and then melts and is collected inside the low temperature-side tank 26 during operation of the internal combustion engine, and that is suctioned at once in a large amount into the internal combustion engine.

By contrast, suctioning of a large amount of condensate water 12 at once into the internal combustion engine is inhibited or prevented in the present invention, as the condensate water 12 is temporarily discharged into the reservoir 30 from the space inside the upper chamber 38 through which the supercharged air flows. In particular, if the reservoir 30 is separated from the upper chamber 38 by the partition plate 36, the condensate water inside the reservoir 30 is not carried away at once in a large amount into the outlet pipe 28 by the flow of supercharged air flowing through the upper chamber 38. Moreover, the condensate water 12 is let fall from the upper chamber 38, through which the supercharged air flows, through the water fall opening 40 into the reservoir 30, so that the condensate water 12 is inhibited from collecting in a large amount on the partition plate 36. As a result, the condensate water 12 on the partition plate 36 is inhibited from being suctioned at once in a large amount into the internal combustion engine. As a result of these, malfunction of the internal combustion engine, such as fluid compression and rough idle, is suppressed or prevented.

Since the water suck-out pipe 32 that extends from the bottom of the reservoir 30 to a position at which the water suck-out pipe 32 opens inside the outlet pipe 28 is provided, the condensate water 12 temporarily collected inside the reservoir 30 is sucked out in appropriate amounts through the water suck-out pipe 32 into the outlet pipe 28 by the pressure difference between a region of the low temperature-side tank 26 and a region of the outlet pipe 28 attributable to differences in flow velocity, pressure loss, etc. between the region of the low temperature-side tank 26 and the region of the outlet pipe 28. A part or the whole of the condensate water discharged into the outlet pipe 28 is evaporated in the internal combustion engine, and is discharged through an exhaust pipe to the outside.

Since the water suck-out pipe 32 is located upstream of the throttle valve and an intake negative pressure downstream of the throttle valve is not used for sucking out the condensate water, even a vehicle with a small engine capacity is unlikely to fail to suck out condensate water due to a lack of negative pressure in a low-speed range. Moreover, since the intake negative pressure is not used, a vacuum pipe from the intercooler 20 to the intake manifold is not required, and work and space required for routing the vacuum pipe are not required, either.

The amount of condensate water sucked out from inside the reservoir 30 through the water suck-out pipe 32 is set so as to be an appropriate amount while the internal combustion engine is idling and the amount of air is small. Thus, an appropriate amount of condensate water can be discharged during idling as well, and an overflow of the condensate water inside the low temperature-side tank 26 during idling is prevented. Moreover, the constriction 328 is provided in the condensate water discharge passage 322 of the water suck-out pipe 32, which inhibits an excessive amount of condensate water from being sucked out through the water suck-out pipe 32 while the throttle valve of the internal combustion engine is fully open and the amount of air is large. As a result, an appropriate amount of condensate water can be discharged during idling as well as while the throttle valve is fully open. The foregoing workings and effects are applicable to all the embodiments (first embodiment to fifth embodiment) of the present invention.

The first embodiment of the present invention further has the following workings and effects.

In the example of FIG. 2 and FIG. 4, the outer diameter of the lateral part 330 of the water suck-out pipe 32 is increased, so that a low pressure for sucking out an appropriate amount of condensate water while the internal combustion engine is idling can be easily created between the lateral part 330 and the outlet pipe 28. Thus, the efficiency of discharging condensate water during idling when the amount of air is small can be secured.

Since the central axial line of the lateral part 330 of the water suck-out pipe 32 is placed coaxially with the central axial line of the outlet pipe 28, an increase in pressure loss of the supercharged air flowing through the outlet pipe 28 when the amount of air is large can be suppressed.

The external shapes of the pressure loss reducing shapes 334, 336 provided at least one of the upper portion of the upright part 332 and the lateral part 330 of the water suck-out pipe 32 are shaped so as to reduce the pressure loss of the flow of supercharged air flowing from the low temperature-side tank 26 into the outlet pipe 28. Thus, an increase in pressure loss of the supercharged air flowing through the outlet pipe 28 when the amount of air is large can be suppressed.

In the example of FIG. 6, the diameter of the condensate water discharge passage 322 formed inside the water suck-out pipe 32 decreases gradually from the leading end of the water suck-out pipe 32 toward the constriction 328. Thus, the condensate water undergoes a smaller pressure loss at the outlet of the constriction 328 when the condensate water flows through the condensate water discharge passage 322, so that the low pressure at the leading end of the water suck-out pipe 32 is almost entirely conducted to the outlet of the constriction 328. As a result, a decrease in condensate water sucking out pressure of the water suck-out pipe 32 over the section from the leading end of the water suck-out pipe 32 to the constriction 328 is suppressed, and the condensate water can be sucked out by a strong low pressure.

In the example of FIG. 7, the outer surface of the lateral part 330 of the water suck-out pipe 32 is provided with the outer diameter-reduced section 342 with the outer diameter decreasing gradually from the maximum outer diameter section 340 of the lateral part 330 toward the leading end. In general, the flow of supercharged air undergoes a comparatively large pressure loss in a region corresponding to the inlet of the outlet pipe 28 and the leading end of the water suck-out pipe 32 where the flow passage sectional area changes rapidly. Thus, there is a smaller change in flow passage sectional area at a region corresponding to the leading end of the water suck-out pipe 32 if the sectional area changes from the outer diameter-reduced section 342 to the total sectional area of the outlet pipe than if the sectional area changes from the maximum outer diameter section 342 to the total sectional area of the outlet pipe, and accordingly the pressure loss of the flow of supercharged air is smaller, so that a decrease in output of the internal combustion engine can be suppressed.

In the example shown in FIG. 8 and FIG. 9, the thinned section 344 is provided around the constriction 328 in the lateral part 330 of the water suck-out pipe 32. Thus, shrinkage sinks around the constriction 328 is suppressed during molding of the water suck-out pipe 32. As a result, the constriction 328 is formed with an accurate diameter, and an excessive sucking out of the condensate water while the throttle valve is fully open can be appropriately inhibited.

The foregoing workings and effects of the examples of FIG. 2, FIG. 4, and FIG. 6 to FIG. 9 are applicable to the first embodiment to the fourth embodiment of the present invention.

In the example of FIG. 2 and FIG. 4, the water suck-out pipe 32 extends from inside the reservoir 30 to the upper chamber 38, bends in the upper chamber 38, enters inside the outlet pipe 28 from inside the upper chamber 38, and opens inside the outlet pipe 28. Thus, a low pressure part for sucking out the condensate water can be created around the outlet of the water suck-out pipe 32 by means of the constriction of the flow of supercharged air at the inlet of the outlet pipe 28 when the supercharged air flows from the low temperature-side tank 26 into the outlet pipe 28.

In the example of FIG. 2 and FIG. 4, the water suck-out pipe 32 is disposed inside the low temperature-side tank 26 and the outlet pipe 28, so that, even when the water suck-out pipe 32 is provided, the external size of the low temperature-side tank 26 and the outlet pipe 28 is not increased compared with that of the related art in which the water suck-out pipe 32 is not provided. As a result, the intercooler device 10 is compact and offers excellent ease of installation in a vehicle.

The foregoing workings and the effects of the example of FIG. 2 and FIG. 4 are applicable to the second embodiment and the fourth embodiment of the present invention.

### Second Embodiment

The second embodiment of the present invention has the following configuration, workings, and effects shown in FIG. 10 in addition to those configurations, workings, and effects that have been described as applicable to the second embodiment of the present invention among the configurations, workings, and effects according to the first embodiment of the present invention.

First, the configuration will be described. A cross-sectional area-reduced section 28a with a cross-sectional area decreasing gradually in the supercharged air flow direction, a throat 28b with a minimum cross-sectional area, and a cross-sectional area-increased section 28c with a cross-sectional area increasing gradually in the supercharged air flow direction are provided in the outlet pipe 28 in this order in the supercharged air flow direction, continuously from the rounded corner at the inlet of the outlet pipe 28. Thus, the outlet pipe 28 is a Venturi pipe in the second embodiment. The open end of the water suck-out pipe 32 leading into the outlet pipe 28 is located at a central portion of the throat 28b.

In the example of FIG. 10, the water suck-out pipe 32 protrudes from inside the low temperature-side tank 26 into the outlet pipe 28, and the open end of the water suck-out pipe 32 leading into the outlet pipe 28 is located at a central portion of the cross-section of the outlet pipe 28 at the throat 28b.

Next, the workings and effects will be described. Since the outlet pipe 28 is a Venturi pipe, it is possible to reduce the pressure loss and produce a low pressure at the open end of the water suck-out pipe 32 leading into the outlet pipe 28. Specifically, the open end of the water suck-out pipe 32 leading into the outlet pipe 28 is located at the throat 28b, so that the Venturi effect of the outlet pipe 28 is further enhanced and the effect of sucking out the condensate water through the water suck-out pipe 32 is enhanced, compared with when the roundness of the corner at the inlet of the outlet pipe 28 alone is used. Moreover, the low pressure at the throat 28b is partially recovered in the cross-sectional area-increased section 28c, so that the pressure loss of the flow of supercharged air in the outlet pipe 28 is reduced compared with when the cross-sectional area-increased section 28c is not provided.

### Third Embodiment

The third embodiment of the present invention has the following configuration, workings, and effects shown in FIG. 11 in addition to those configurations, workings, and effects having been described as applicable to the third embodiment of the present invention among the configurations, workings, and effects according to the first embodiment of the present invention.

First, the configuration will be described. The water suck-out pipe 32 couples the inside of the reservoir 30 to the inside of the outlet pipe 28 by extending from the low temperature-side tank 26 once to the outside of the low temperature-side tank 26. For example, the water suck-out pipe 32 may be composed of a pipe 32a penetrating a wall of the reservoir 30, a pipe 32b penetrating a wall of the outlet pipe 28, and a hose 32c connecting the pipes 32a, 32b to each other outside the reservoir 30. The pipe 32b is formed so as to have the same structure as the lateral part 330 and the upper portion of the upright part 332 of the water suck-out pipe 32 described in the first embodiment, and the constriction 328 is formed in a portion of the condensate water discharge passage 32 located inside the lateral part 330.

Next, the workings and effects will be described. Even when the water suck-out pipe 32 does not reach a lowermost end of the low temperature-side tank 26 due to the depth, the complicated shape, etc. of the low temperature-side tank 26, forming a part of the water suck-out pipe 32 by a pipe (which may be the hose 32c) routed to the outside of the low temperature-side tank 26 makes it easy to couple the inside of the reservoir 30 and the inside of the outlet pipe 28. The external size of the intercooler device 10 is increased, but the flexibility of routing of the water suck-out pipe 32 is higher.

### Fourth Embodiment

The fourth embodiment of the present invention has the following configuration, workings, and effects shown in FIG. 12 and FIG. 13 in addition to those configurations, workings, and effects having been described as applicable to the fourth embodiment of the present invention among the configurations, workings, and effects according to the first embodiment of the present invention.

First, the configuration will be described. The core 24 is a cross-flow core through which the supercharged air flows in the left-right direction in FIG. 12. In this case, the low temperature-side tank 26 extends in the upright direction. The low temperature-side tank 26 is extended to a position corresponding to a lower part of the core 24 or to a position further on the lower side than the position corresponding to the lower part of the core 24, and has the reservoir 30 at a position further on the lower side than the position corresponding to the lower part of the core 24. The outlet pipe 28 is provided in a region of the low temperature-side tank 26 other than the region where the reservoir 30 is provided, i.e., provided in an intermediate part or an upper end part of the low temperature-side tank 26 in the upright direction. The outlet pipe 28 extends toward the deep side in a direction orthogonal to the sheet of FIG. 12, and extends in a direction orthogonal to the left-right direction in FIG. 12.

An area in a lower end part inside the low temperature-side tank 26 constitutes the reservoir 30. The water suck-out pipe 32 extends from the bottom of the reservoir 30 to a position at which the water suck-out pipe 32 opens inside the outlet pipe 28. As shown in FIG. 13, the water suck-out pipe 32 may be located inside the low temperature-side tank 26 and the outlet pipe 28, or, although this is not shown, the water suck-out pipe 32 may extend from a side wall of the low temperature-side tank 26 once to the outside of the low temperature-side tank 26, penetrate a wall of the outlet pipe 28, and open inside the outlet pipe 28.

Next, the workings and effects will be described. Since the water suck-out pipe 32 extends from the bottom of the reservoir 30 to a position at which the water suck-out pipe 32 opens inside the outlet pipe 28, the cross-flow intercooler 20 can also suck out the condensate water 12 while inhibiting the condensate water 12 from being sucked out at once.

As shown in FIG. 12 and FIG. 13, in the case where the lower end of the reservoir 30 is located nearly at the same level as the lower end of the core 24, the partition plate 36 and the baffle plate 44 may be omitted. In the case where the reservoir 30 is located further on the lower side than the lower end of the core 24 (not shown), the partition plate 36 and the baffle plate 44 may be provided. The configurations, workings, and effects of the partition plate 36 and the baffle plate 44 having been described in the first embodiment as applicable to the fourth embodiment can be applied to the configurations, workings, and effects of the partition plate 36 and the baffle plate 44 in this case.

### Fifth Embodiment

The fifth embodiment of the present invention has the following configuration, workings, and effects shown in FIG. 14 in addition to those configurations, workings, and effects having been described as applicable to the fifth embodiment of the present invention among the configurations, workings, and effects according to the first embodiment of the present invention.

First, the configuration will be described. The cross-sectional area-reduced section 28a with the cross-sectional area decreasing gradually in the supercharged air flow direction, the throat 28b with the minimum cross-sectional area, and the cross-sectional area-increased section 28c with the cross-sectional area increasing gradually in the supercharged air flow direction are provided in the outlet pipe 28 in this order in the supercharged air flow direction, continuously from the rounded corner at the inlet of the outlet pipe 28. Thus, the outlet pipe 28 is a Venturi pipe in the fifth embodiment. A hole 28d that extends in a direction orthogonal to the central axial line of the outlet pipe 28 is provided in a wall surface of the throat 28b.

The water suck-out pipe 32 couples the inside of the reservoir 30 to the inside of the outlet pipe 28 by extending from inside the low temperature-side tank 26 once to the outside of the low temperature-side tank 26. For example, the water suck-out pipe 32 may be composed of the pipe 32a penetrating the wall of the reservoir 30, the pipe 32b connected to the hole 28d, opened in the wall surface of the throat 28b of the outlet pipe 28, and fixed to the wall of the outlet pipe 28, and the hose 32c connecting the pipes 32a, 32b to each other outside the reservoir 30. The water suck-out pipe 32 does not enter the outlet pipe 28, but is connected to the hole 28d and opens to the inside of the outlet pipe 28 at the surface of the throat 28b. The constriction 328 is formed in the condensate water discharge passage 322 formed inside the pipe 32b.

Next, the workings and effects will be described. Since the water suck-out pipe 32 opens in the throat 28b of the outlet pipe 28 that is a Venturi pipe, the water suck-out pipe 32 uses the low pressure created at the throat 28b to suck out the condensate water 12 from inside the reservoir 30. Since the water suck-out pipe 32 does not protrude into the outlet pipe 28, the flow of supercharged air does not undergo a pressure loss that occurs as the supercharged air hits a protrusion of the water suck-out pipe 32.

Since the hose 32c of the water suck-out pipe 32 is located outside the low temperature-side tank 26, even when the water suck-out pipe 32 does not reach the lowermost end of the low temperature-side tank 26 due to the depth, the complicated shape, etc. of the low temperature-side tank 26, the inside of the reservoir 30 and the inside of the outlet pipe 28 can be easily coupled through the hose 32c. The external size of the intercooler device 10 is increased compared with when the water suck-out pipe 32 is located inside the low temperature-side tank 26, but the flexibility of routing of the water suck-out pipe 32 is higher.

## Claims

1. An intercooler device (10) of a supercharged internal combustion engine, the intercooler device (10) comprising:
a low temperature-side tank (26);
an outlet pipe (28) extending from the low temperature-side tank (26);
a reservoir (30) provided in a lower part of the low temperature-side tank (26) and temporarily collecting condensate water; and
a water suck-out pipe (32) extending from the reservoir (30) to a position at which the water suck-out pipe (32) opens inside the outlet pipe (28), wherein
an appropriate amount of condensate water is sucked out from inside the reservoir (30) through the water suck-out pipe (32) while the internal combustion engine is idling,
a constriction (328) that inhibits an excessive amount of condensate water from being sucked out through the water suck-out pipe (32) while a throttle valve of the internal combustion engine is fully open is defined in a condensate water discharge passage (322) formed inside the water suck-out pipe (32),
the water suck-out pipe (32) includes an upright part (332) that has a portion opening at a bottom of the reservoir (30) and extending in an upright direction, and a lateral part (330) that is connected to an upper end of the upright part (332), extends in a lateral direction, and opens inside the outlet pipe (28),
**characterized in that**
an outer diameter of the lateral part (330) of the water suck-out pipe (32) is larger than the outer diameter of the upright part (332) thereof, and is set to such a diameter that a pressure for sucking out the appropriate amount of the condensate water while the internal combustion engine is idling is created in a supercharged air passage part defined between an outer surface of the lateral part (330) and an inner surface of the outlet pipe (28), and
a central axial line of the lateral part (330) of the water suck-out pipe (32) is placed coaxially with a central axial line of the outlet pipe (28).

2. The intercooler device (10) according to claim 1, wherein an opening of the water suck-out pipe (32) leading into the outlet pipe (28) is located upstream of the throttle valve in a supercharged air flow direction.

3. The intercooler device (10) according to claim 1, wherein a pressure difference between both ends of the water suck-out pipe (32) is set to 20 to 100 mm in head while the internal combustion engine is idling, and the diameter of the constriction (328) is set to 1 to 3 mm.

4. The intercooler device (10) according to claim 1, wherein the constriction (328) is formed only in a part of the entire condensate water discharge passage (322) in its lengthwise direction.

5. The intercooler device (10) according to claim 1, wherein the diameter of the condensate water discharge passage (322) on both sides of the constriction (328) in a discharged condensate water flow direction is larger than the diameter of the constriction (328).

6. The intercooler device (10) according to claim 1, wherein an external form of at least one of an upper portion of the upright part (332) and the lateral part (330) of the water suck-out pipe (32) is shaped so as to reduce pressure loss of a flow of supercharged air flowing from the low temperature-side tank (26) into the outlet pipe (28).

7. The intercooler device (10) according to claim 1, wherein the diameter of the condensate water discharge passage (322) formed inside the water suck-out pipe (32) decreases gradually from a leading end of the water suck-out pipe (32) toward the constriction (328).

8. The intercooler device (10) according to claim 1, wherein the outer surface of the lateral part (330) of the water suck-out pipe (32) is provided with an outer diameter-reduced section (342) with an outer diameter decreasing gradually from a maximum outer diameter section of the lateral part (330) toward a leading end.

9. The intercooler device (10) according to claim 1, wherein a thinned section (344) for preventing sinks during molding of the water suck-out pipe (32) is provided around the constriction (328) in the lateral part (330) of the water suck-out pipe (32).

10. The intercooler device (10) according to claim 1, wherein
the low temperature-side tank (26) is provided with a partition plate (36) that partitions the inside of the low temperature-side tank (26) into upper and lower parts, and
the water suck-out pipe (32) extends from inside the reservoir (30) to an upper chamber (38) by penetrating the partition plate (36), bends in the upper chamber (38), enters inside the outlet pipe (28) from inside the upper chamber (38), and opens inside the outlet pipe (28).

11. The intercooler device (10) according to claim 1, wherein the water suck-out pipe (32) couples the inside of the reservoir (30) to the inside of the outlet pipe (28) by extending once to the outside of the low temperature-side tank (26).

12. The intercooler device (10) according to claim 1, wherein
a cross-sectional area-reduced section (28a) with a cross-sectional area decreasing gradually in an intake gas flow direction, a throat (28b) with a minimum cross-sectional area, and a cross-sectional area-increased section (28c) with a cross-sectional area increasing gradually in the intake gas flow direction are provided in the outlet pipe (28) in this order in the intake gas flow direction, and
an open end of the water suck-out pipe (32) leading into the outlet pipe (28) is located in a region inside the outlet pipe (28) corresponding to the throat (28b).

13. The intercooler device (10) according to claim 1, wherein
an intercooler includes a down-flow core (24) through which an intake gas flows downward or a cross-flow core (24) through which an intake gas flows in a crosswise direction,
the outlet pipe (28) is provided in an intermediate part or an upper end part of the low temperature-side tank (26) in an upright direction, and
an area inside the low temperature-side tank (26) located further on a lower side than the outlet pipe (28) constitutes the reservoir (30), and the water suck-out pipe (32) extends from a bottom of the reservoir (30) to a position at which the water suck-out pipe (32) opens inside the outlet pipe (28).

## Patentansprüche

1. Zwischenkühler (10) für einen aufgeladenen Verbrennungsmotor, wobei der Zwischenkühler
einen niedrigtemperaturseitigen Tank (26);
ein Austrittsrohr (28), das sich von dem niedrigtemperaturseitigen Tank (26) erstreckt;
ein Reservoir (30), das in einem unteren Teil des niedrigtemperaturseitigen Tanks (26) vorgesehen ist und vorübergehend Kondenswasser sammelt; und
ein Wasserabsaugrohr (32) aufweist, das sich von dem Reservoir (30) zu einer Position erstreckt, an der sich das Wasserabsaugrohr (32) innerhalb des Austrittsrohrs (28) öffnet, wobei
eine angemessene Menge an Kondenswasser aus dem Inneren des Reservoirs (30) durch das Wasserabsaugrohr (32) abgesaugt wird während sich der Verbrennungsmotor im Leerlauf befindet,
eine Einschnürung (328), die verhindert, dass eine übermäßige Menge an Kondenswasser durch das Wasserabsaugrohr (32) abgesaugt wird, während ein Drosselventil des Verbrennungsmotors vollständig geöffnet ist, in einem innerhalb des Wasserabsaugrohrs (32) ausgebildeten Kondenswasserablaufkanals (322) definiert ist,
das Wasserabsaugrohr (32) einen aufrechten Teil (332), der einen Abschnitt aufweist, der sich an einem Boden des Reservoirs (30) öffnet und sich in einer Aufrechtrichtung erstreckt, und einen seitlichen Teil (330) aufweist, der mit einem oberen Ende des aufrechten Teils (332) verbunden ist, sich in einer Seitenrichtung erstreckt und sich innerhalb des Austrittsrohrs (28) öffnet, **dadurch gekennzeichnet, dass**
ein Außendurchmesser des seitlichen Teils (330) des Wasserabsaugrohrs (32) größer ist als der Außendurchmesser seines aufrechten Teils (332) und auf einen Durchmesser derart festgesetzt ist, dass ein Druck zum Absaugen der angemessenen Menge an Kondenswasser, während sich der Verbrennungsmotor im Leerlauf befindet, in einem Teil eines Kanals mit aufgeladener Luft erzeugt wird, der zwischen einer Außenfläche des seitlichen Teils (330) und einer Innenfläche des Austrittsrohrs (28) definiert ist, und
eine zentrale Axiallinie des seitlichen Teils (330) des Wasserabsaugrohrs (32) mit einer zentralen Axiallinie des Austrittsrohrs (28) koaxial platziert ist.

2. Zwischenkühler (10) nach Anspruch 1, wobei eine Öffnung des Wasserabsaugrohrs (32), das in das Austrittsrohr (28) führt, in einer Strömungsrichtung der aufgeladenen Luft stromauf von dem Drosselventil angeordnet ist.

3. Zwischenkühler (10) nach Anspruch 1, wobei eine Druckdifferenz zwischen beiden Enden des Wasserabsaugrohrs (32) auf einen Druckhöhenwert von 20 bis 100 mm festgesetzt ist, während sich der Verbrennungsmotor im Leerlauf befindet, und der Durchmesser der Einschnürung (328) auf einen Wert von 1 bis 3 mm festgesetzt ist.

4. Zwischenkühler (10) nach Anspruch 1, wobei die Einschnürung (328) lediglich in einem Teil des gesamten Kondenswasserablaufkanals (322) in seiner Längsrichtung ausgebildet ist.

5. Zwischenkühler (10) nach Anspruch 1, wobei der Durchmesser des Kondenswasserablaufkanals (322) zu beiden Seiten der Einschnürung (328) in einer Strömungsrichtung des Ablaufkondenswassers größer ist als der Durchmesser der Einschnürung (328).

6. Zwischenkühler (10) nach Anspruch 1, wobei eine Außenform des oberen Abschnitts des aufrechten Teils (332) und/oder des seitlichen Teils (330) des Wasserabsaugrohrs (32) derart geformt ist, dass ein Druckverlust einer Strömung der aufgeladenen Luft verringert wird, die von dem niedrigtemperaturseitigen Tank (26) in das Austrittsrohr (28) strömt.

7. Zwischenkühler (10) nach Anspruch 1, wobei sich der Durchmesser des innerhalb des Wasserabsaugrohrs (32) ausgebildeten Kondenswasserablaufkanals (322) von einem Führungsende des Wasserabsaugrohrs (32) in Richtung der Einschnürung (328) allmählich verringert.

8. Zwischenkühler (10) nach Anspruch 1, wobei die Außenfläche des seitlichen Teils (330) des Wasserabsaugrohrs (32) mit einem außendurchmesserverringerten Abschnitt (342) mit einem Außendurchmesser versehen ist, der sich von einem Abschnitt mit maximalem Außendurchmesser des seitlichen Teils (330) in Richtung eines Führungsendes allmählich verringert.

9. Zwischenkühler (10) nach Anspruch 1, wobei um die Einschnürung (38) ein verdünnter Abschnitt (344) zum Verhindern von Senken während des Gießens des Wasserabsaugrohrs (32) in dem seitlichen Teil (330) des Wasserabsaugrohrs (32) vorgesehen ist.

10. Zwischenkühler (10) nach Anspruch 1, wobei
der niedrigtemperaturseitige Tank (26) mit einer Trennwand (36) versehen ist, die das Innere des niedrigtemperaturseitigen Tanks (26) in oberen und unteren Teilen unterteilt, und
das Wasserabsaugrohr (32) sich vom Inneren des Reservoirs (30) zu einer oberen Kammer (38) erstreckt, indem es die Trennwand (36) durchdringt, sich in der oberen Kammer (38) biegt, vom Inneren der oberen Kammer (38) in das Innere des Austrittsrohrs (28) eintritt und sich innerhalb des Austrittsrohrs (28) öffnet.

11. Zwischenkühler (10) nach Anspruch 1, wobei das Wasserabsaugrohr (32) das Innere des Reservoirs (30) mit dem Inneren des Austrittsrohrs (28) verbindet, in dem es sich einmal zur Außenseite des niedrigtemperaturseitigen Tanks (26) erstreckt.

12. Zwischenkühler (10) nach Anspruch 1, wobei
ein querschnittsflächenreduzierter Abschnitt (28a) mit einer Querschnittsfläche, die sich in einer Ansauggasströmungsrichtung allmählich verringert, eine Engstelle (28b) mit einer minimalen Querschnittsfläche und ein querschnittsflächenvergrößter Abschnitt (28c) mit einer Querschnittsfläche, die sich in der Ansauggasströmungsrichtung allmählich vergrößert, in dem Austrittsrohr (28) in der Ansauggasströmungsrichtung in dieser Reihfolge vorgesehen sind, und
ein Öffnungsende des Wasserabsaugrohrs (32), das in das Austrittsrohr (28) führt, in einem Bereich innerhalb des Austrittsrohrs (28) entsprechend der Engstelle (28b) angeordnet ist.

13. Zwischenkühler (10) nach Anspruch 1, wobei
ein Zwischenkühler einen Fallstromkern (24), durch den ein Ansauggas nach unten fließt, oder einen Querstromkern (24) aufweist, durch den ein Ansauggas in einer Querrichtung fließt,
das Austrittsrohr (28) in einem Zwischenteil oder in einem oberen Endteil des niedrigtemperaturseitigen Tanks (26) in einer Aufrechtsrichtung vorgesehen ist, und
eine Fläche innerhalb des niedrigtemperaturseitigen Tanks (26), die ferner auf einer untereren Seite als das Austrittsrohr (28) angeordnet ist, das Reservoir (30) konstituiert, und das Wasserabsaugrohr (32) sich von einem Boden des Reservoirs (30) zu einer Position erstreckt, an der sich das Wasserabsaugrohr (32) innerhalb des Austrittsrohrs (28) öffnet.

## Revendications

1. Dispositif de refroidisseur intermédiaire (10) d'un moteur à combustion interne suralimenté, le dispositif de refroidisseur intermédiaire (10) comprenant :
un récipient de côté basse température (26) ;
un tuyau de sortie (28) s'étendant à partir du récipient de côté basse température (26) ;
un réservoir (30) fourni dans une partie inférieure du récipient de côté basse température (26) et recueillant temporairement de l'eau condensée ; et
un tuyau d'aspiration d'eau (32) s'étendant à partir du réservoir (30) vers une position à laquelle le tuyau d'aspiration d'eau (32) s'ouvre à l'intérieur du tuyau de sortie (28), dans lequel
une quantité appropriée d'eau condensée est aspirée à partir de l'intérieur du réservoir (30) par le tuyau d'aspiration d'eau (32) alors que le moteur à combustion interne tourne au ralenti,
un resserrement (328) qui empêche qu'une quantité excessive d'eau condensée soit aspirée par le tuyau d'aspiration d'eau (32) alors qu'une vanne d'étranglement du moteur à combustion interne est entièrement ouverte est défini dans un passage d'évacuation d'eau condensée (322) formé à l'intérieur du tuyau d'aspiration d'eau (32),
le tuyau d'aspiration d'eau (32) comprend une partie verticale (332) qui présente une portion s'ouvrant dans un fond du réservoir (30) et s'étendant dans une direction verticale, et une partie latérale (330) qui est connectée à une extrémité supérieure de la partie verticale (332), s'étend dans une direction latérale, et s'ouvre à l'intérieur du tuyau de sortie (28),
**caractérisé en ce que**
un diamètre externe de la partie latérale (330) du tuyau d'aspiration d'eau (32) est plus large que le diamètre externe de la partie verticale (332) de celui-ci, et est réglé à un diamètre tel qu'une pression d'aspiration de la quantité appropriée de l'eau condensée alors que le moteur à combustion interne tourne au ralenti soit créée dans une partie de passage d'air suralimenté définie entre une surface externe de la partie latérale (330) et une surface interne du tuyau de sortie (28), et
une ligne axiale centrale de la partie latérale (330) du tuyau d'aspiration d'eau (32) est placée coaxialement avec une ligne axiale centrale du tuyau de sortie (28).

2. Dispositif de refroidisseur intermédiaire (10) selon la revendication 1, dans lequel une ouverture du tuyau d'aspiration d'eau (32) menant dans le tuyau de sortie (28) est disposée en amont de la vanne d'étranglement dans une direction d'écoulement d'air suralimenté.

3. Dispositif de refroidisseur intermédiaire (10) selon la revendication 1, dans lequel une différence de pression entre les deux extrémités du tuyau d'aspiration d'eau (32) est réglée à de 20 à 100 mm en tête alors que le moteur à combustion interne tourne au ralenti, et le diamètre du resserrement (328) est réglé à de 1 à 3 mm.

4. Dispositif de refroidisseur intermédiaire (10) selon la revendication 1, dans lequel le resserrement (328) est uniquement formé dans une partie du passage entier d'évacuation d'eau condensée (322) dans sa direction longitudinale.

5. Dispositif de refroidisseur intermédiaire (10) selon la revendication 1, dans lequel le diamètre du passage d'évacuation d'eau condensée (322) sur les deux côtés du resserrement (328) dans une direction d'écoulement d'eau condensée évacuée est plus large que le diamètre du resserrement (328).

6. Dispositif de refroidisseur intermédiaire (10) selon la revendication 1, dans lequel une forme externe d'au moins une d'une portion supérieure de la partie verticale (332) et de la partie latérale (330) du tuyau d'aspiration d'eau (32) est façonnée afin de réduire la perte de charge d'un écoulement d'air suralimenté s'écoulant à partir du récipient de côté basse température (26) dans le tuyau de sortie (28).

7. Dispositif de refroidisseur intermédiaire (10) selon la revendication 1, dans lequel le diamètre du passage d'évacuation d'eau condensée (322) formé à l'intérieur du tuyau d'aspiration d'eau (32) diminue progressivement à partir d'une extrémité avant du tuyau d'aspiration d'eau (32) vers le resserrement (328).

8. Dispositif de refroidisseur intermédiaire (10) selon la revendication 1, dans lequel la surface externe de la partie latérale (330) du tuyau d'aspiration d'eau (32) est munie d'une section réduite en diamètre externe (342) avec un diamètre externe diminuant progressivement à partir d'une section de diamètre externe maximal de la partie latérale (330) vers une extrémité avant.

9. Dispositif de refroidisseur intermédiaire (10) selon la revendication 1, dans lequel une section amincie (344) pour éviter des puits pendant le moulage du tuyau d'aspiration d'eau (32) est fournie autour du resserrement (328) dans la partie latérale (330) du tuyau d'aspiration d'eau (32).

10. Dispositif de refroidisseur intermédiaire (10) selon la revendication 1, dans lequel
le récipient de côté basse température (26) est muni d'une plaque de partition (36) de sorte qu'il divise l'intérieur du récipient de côté basse température (26) en des parties supérieure et inférieure, et
le tuyau d'aspiration d'eau (32) s'étend à partir de l'intérieur du réservoir (30) jusqu'à une chambre supérieure (38) en pénétrant la plaque de partition (36), se courbe dans la chambre supérieure (38), entre à l'intérieur du tuyau de sortie (28) à partir de l'intérieur de la chambre supérieure (38), et s'ouvre à l'intérieur du tuyau de sortie (28).

11. Dispositif de refroidisseur intermédiaire (10) selon la revendication 1, dans lequel le tuyau d'aspiration d'eau (32) couple l'intérieur du réservoir (30) à l'intérieur du tuyau de sortie (28) en s'étendant une fois vers l'extérieur du récipient de côté basse température (26).

12. Dispositif de refroidisseur intermédiaire (10) selon la revendication 1, dans lequel
une section réduite en surface transversale (28a) avec une surface transversale diminuant progressivement dans une direction d'écoulement de gaz d'admission, une gorge (28b) avec une section transversale minimale, et une section augmentée en surface transversale (28c) avec une section transversale augmentant progressivement dans la direction d'écoulement de gaz d'admission sont fournies dans le tuyau de sortie (28) dans cet ordre dans la direction d'écoulement de gaz d'admission, et
une extrémité ouverte du tuyau d'aspiration d'eau (32) menant dans le tuyau de sortie (28) est disposée dans une région à l'intérieur du tuyau de sortie (28) correspondant à la gorge (28b).

13. Dispositif de refroidisseur intermédiaire (10) selon la revendication 1, dans lequel
un refroidisseur intermédiaire comprend un noyau d'écoulement vers le bas (24) à travers lequel un gaz d'admission s'écoule vers le bas ou un noyau d'écoulement transversal (24) à travers lequel un gaz d'admission s'écoule dans une direction transversale,
le tuyau de sortie (28) est fourni dans une partie intermédiaire ou une partie d'extrémité supérieure du récipient de côté basse température (26) dans une direction verticale, et
une surface à l'intérieur du récipient de côté basse température (26) plus disposée sur un côté inférieur que le tuyau de sortie (28) constitue le réservoir (30), et le tuyau d'aspiration d'eau (32) s'étend à partir d'un fond du réservoir (30) vers une position à laquelle le tuyau d'aspiration d'eau (32) s'ouvre à l'intérieur du tuyau de sortie (28).
